# EUROPEAN PATENT APPLICATION

(11) **EP 3 797 581 A1**
(43) Date of publication of application: **31.03.2021**
(21) Application number: 19808471.7
(22) Date of filing: 22.05.2019
(51) Int. Cl.: A01G 25/16

(54) **IRRIGATION SYSTEM AND CONTROL METHOD THEREFOR, IRRIGATION APPARATUS, AND DELIVERY TUBE**

(30) Priority: 22.05.2018 CN 201810495121
(71) Applicant: Positec Power Tools (Suzhou) Co., Ltd, Suzhou, Jiangsu 215123 (CN)
(72) Inventor: ANDRIOLO, Paolo, 36100 Vicenza (IT); DALFRA, Davide, 36100 Vicenza (IT)
(74) Representative: Dentons UK and Middle East LLP
(86) International application number: PCT/CN2019/087925
(87) International publication number: WO 2019/223711

(57) **Abstract**

The present invention provides an irrigation system and control method thereof, an irrigation apparatus, a conveying pipe. The irrigation system includes: a conveying pipe, used for conveying a liquid from an irrigation source to an irrigation region; and an irrigation apparatus, connected to the conveying pipe, and irrigating the irrigation region with the liquid conveyed by the conveying pipe, where one conveying pipe is connected to at least two irrigation apparatuses at intervals, each irrigation apparatus includes a valve, each irrigation apparatus further includes a control module for controlling opening or closing of the valve, the control modules of the irrigation apparatuses independently control the opening or closing of the valves, to enable the at least two irrigation apparatuses to respectively perform irrigation operations within different time periods, the control module includes a communication port for obtaining remote irrigation information, and the control module controls the opening or closing of the valve according to the irrigation information obtained by the communication port.

## Description

### BACKGROUND

### Technical Field

The present invention relates to an irrigation system, and in particular, to an irrigation system irrigating different regions through one conveying pipe, a control method of an irrigation system, an irrigation apparatus, and a conveying pipe.

### Related Art

Irrigation pipes usually need to be laid in an irrigation system, especially a horticultural irrigation system or a crop irrigation system, to transfer a liquid for irrigation from an irrigation source (for example, a water source) to a specific irrigation region. There are usually a plurality of irrigation regions in an actual operating environment. These irrigation regions are physically separated regions or regions are connected but have different irrigation requirements, for example, regions planted with different types of vegetation. In a conventional irrigation system, to irrigate a plurality of regions, one conveying pipe is disposed in each irrigation region, so that a liquid can be conveyed to different irrigation regions through different conveying pipes. In such a manner of arranging one conveying pipe in each irrigation region, the costs of the irrigation system are increased, the difficulty of arranging pipes by users is increased, and the appearance of the irrigation regions is spoiled.

To resolve the foregoing technical problems, Patent Application No. CN201510622329.6 discloses an irrigation method for conveying a plurality of types of supplementals to different irrigation regions by using one conveying pipe. Technical problems to be overcome during irrigation using the method are how to control the on or off of irrigation apparatuses in different operating regions when different irrigation regions require irrigation within different time periods and how to supply power to the irrigation apparatuses in the different operating regions.

### SUMMARY

Based on this, for the foregoing problems, it is necessary to provide an irrigation system that can control different irrigation apparatuses to be opened or closed within different time periods and supply power to the different irrigation apparatuses when one same conveying pipe is connected to more than two irrigation apparatuses.

The present invention provides an irrigation system, the irrigation system including: a conveying pipe, used for conveying a liquid from an irrigation source to an irrigation region; and an irrigation apparatus, connected to the conveying pipe, and irrigating the irrigation region with the liquid conveyed by the conveying pipe, where one conveying pipe is connected to at least two irrigation apparatuses at intervals, each irrigation apparatus includes a valve, each irrigation apparatus further includes a control module for controlling opening or closing of the valve, the control modules of the irrigation apparatuses independently control the opening or closing of the valves, to enable the at least two irrigation apparatuses to respectively perform irrigation operations within different time periods, the control module includes a communication port for obtaining remote irrigation information, and the control module controls the opening or closing of the valve according to the irrigation information obtained by the communication port.

In an embodiment, a conductive cable is disposed in the conveying pipe, the conductive cable includes a communication cable connected to the communication port, and the communication port obtains irrigation information through the communication cable.

In an embodiment, a conductive cable is disposed in the conveying pipe, and the conductive cable includes a power cable connecting the irrigation apparatus to a power supply, to supply electrical energy required for the irrigation apparatus to operate.

In an embodiment, the irrigation system further includes a conductive cable connected to the irrigation apparatus, and the conductive cable includes a communication cable and a power cable.

In an embodiment, the conveying pipe includes a conductive layer used for arranging a conductive cable and a liquid conveyance layer used for conveying a liquid, and the conductive layer is isolated from the liquid conveyance layer.

In an embodiment, a conductive cable is disposed in the conveying pipe, the irrigation apparatus includes a first interface, the conveying pipe includes a second interface matching the first interface, and the first interface matches the second interface in shape, to enable the port of the conductive cable to be connected to the corresponding port of the irrigation apparatus when the first interface is joined to the second interface.

In an embodiment, the irrigation apparatus includes a first wireless communication unit connected to the communication port, and the communication port obtains irrigation information through the first wireless communication unit.

In an embodiment, the first wireless communication unit includes a cellular network communication unit, a Wi-Fi communication unit, a Bluetooth communication unit, an RF communication unit or a UWB communication unit.

In an embodiment, the first wireless communication units communicate with each other to form a multi-level transmission communication network with the first wireless communication units as communication nodes.

In an embodiment, a power generation device is further disposed at the irrigation apparatus to supply electrical energy required for the irrigation apparatus to operate.

In an embodiment, the power generation device includes a turbine, a photovoltaic unit or a piezoelectric unit.

In an embodiment, the irrigation system includes a bypass pipe connected to the power generation device, and a liquid in the bypass pipe flows through the power generation device to generate electricity.

In an embodiment, the conveying pipe is an annular pipe, and a liquid in the conveying pipe forms a loop. In an embodiment, the communication port of each irrigation apparatus obtains irrigation information from one same communication source.

In an embodiment, the irrigation system includes a control center, and the communication port is communicatively connected to the control center to obtain irrigation information from the control center.

In an embodiment, the control center is disposed at an end, connected to the irrigation source, of the conveying pipe.

In an embodiment, the control center includes a user interaction interface used for setting irrigation information by a user.

In an embodiment, the control center includes a second wireless communication unit for obtaining the remote irrigation information.

In an embodiment, the communication port is communicatively connected to an external control device, for example, communicatively connected to an intelligent terminal of a user.

In an embodiment, the irrigation information includes preset scheduling information, the preset scheduling information includes an operation start time and an operation end time of each irrigation apparatus, and the control module controls the opening of the valve of the irrigation apparatus according to the operation start time, and controls the closing of the valve of the irrigation apparatus according to the operation end time.

The present invention further provides a control method of an irrigation system, the irrigation system including: a conveying pipe, conveying a liquid from an irrigation source to an irrigation region; and an irrigation apparatus, connected to the conveying pipe, and irrigating the irrigation region with the liquid conveyed by the conveying pipe, where one conveying pipe is connected to at least two irrigation apparatuses at intervals, and each irrigation apparatus includes a valve and a control module controlling opening or closing of the valve, the control method including: respectively obtaining, by each irrigation apparatus, remote irrigation information; and independently controlling, by the control module of each irrigation apparatus, the opening or closing of the valve according to the irrigation information, to enable the at least two irrigation apparatuses to respectively perform irrigation operations within different time periods.

The present invention further provides an irrigation apparatus, used for being joined to a conveying pipe to perform an irrigation operation on an irrigation region, and including: a valve, the irrigation apparatus performing an irrigation operation when the valve is opened, where the irrigation apparatus further includes: a control module, controlling opening or closing of the valve, where the control module includes: a communication port for obtaining remote irrigation information, the control module controls the opening or closing of the valve according to the irrigation information obtained by the communication port; and a first interface, used for being joined to a second interface of the conveying pipe.

In an embodiment, the irrigation apparatus further includes a power generation device, to supply electrical energy required for the irrigation apparatus to operate.

In an embodiment, the power generation device includes a turbine, a photovoltaic unit or a piezoelectric unit.

In an embodiment, the irrigation apparatus includes a bypass pipe connected to the power generation device, and a liquid in the bypass pipe flows through the power generation device to generate electricity.

In an embodiment, the conveying pipe is an annular pipe, and a liquid in the conveying pipe forms a loop. In an embodiment, the conveying pipe includes a liquid conveyance layer, and the first interface matches the second interface of the conveying pipe in shape to enable the irrigation apparatus to be in fluid communication with the conveying pipe when the first interface is joined to the second interface.

In an embodiment, the conveying pipe includes a conductive layer, a communication cable and/or a power cable is disposed in the conductive layer, the first interface is connected to a communication port and/or a power supply port of the irrigation apparatus, and the first interface matches the second interface of the conveying pipe in shape, to enable the communication port and/or the power supply port of the irrigation apparatus to be correspondingly connected to ports of the communication cable and/or the power cable of the conveying pipe when the first interface is joined to the second interface.

The present invention further provides a conveying pipe, used for conveying a liquid from an irrigation source to an irrigation region, the conveying pipe including a liquid conveyance layer, used for conveying a liquid; the conveying pipe further including a conductive layer, where a communication cable and/or a power cable is disposed in the conductive layer, the communication cable and/or the power cable extends in the extension direction of the conveying pipe, and the liquid conveyance layer is isolated from the conductive layer.

Compared with the prior art, beneficial effects of the present invention are as follows: Control modules of irrigation apparatuses obtain remote irrigation information, and independently control opening or closing of corresponding valves based on the remote irrigation information, to enable different irrigation apparatuses to perform irrigation operations within different time periods, so that one conveying pipe is used to complete an irrigation task for a plurality of irrigation regions having different irrigation requirements. In the solutions of the present invention, the costs of the irrigation system are reduced, the installation is facilitated for a user, and the appearance of the irrigation regions is kept from being spoiled.

### BRIEF DESCRIPTION OF THE DRAWINGS

The foregoing objectives, technical solutions, and beneficial effects of the present invention can be clearly obtained through the following detailed description of specific embodiments, which can implement the present invention in combination with the description of accompanying drawings.
FIG. 1 is a schematic diagram of an irrigation system according to an embodiment of the present invention;
FIG. 2 is a schematic diagram of an irrigation apparatus according to an embodiment of the present invention;
FIG. 3 is a sectional view of a conveying pipe according to an embodiment of the present invention;
FIG. 4 is a flowchart of controlling an irrigation system according to an embodiment of the present invention;
FIG. 5 is a schematic diagram of an irrigation system according to another embodiment of the present invention;
FIG. 6 is a schematic diagram of an irrigation system according to another embodiment of the present invention; and
FIG. 7 is a schematic diagram of an irrigation system according to another embodiment of the present invention.

### DETAILED DESCRIPTION

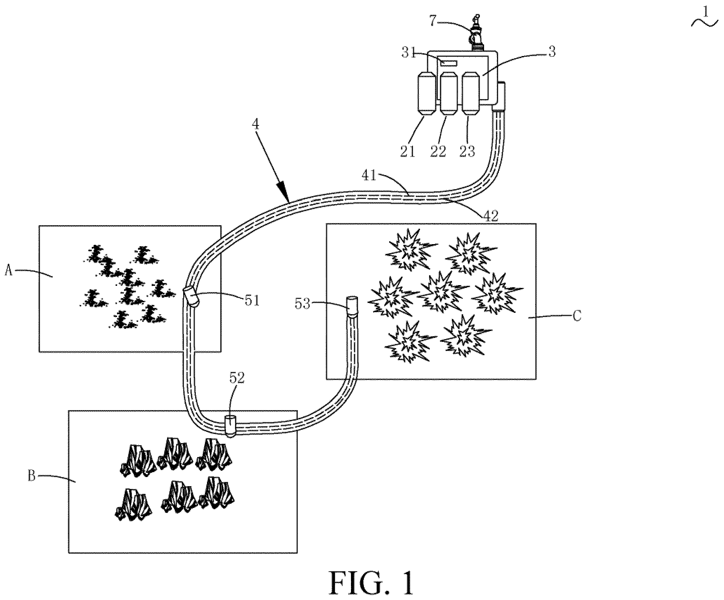

FIG. 1 is a schematic diagram of an irrigation system 1 according to an embodiment of the present invention. As shown in FIG. 1, in this embodiment, the irrigation system 1 includes a conveying pipe 4 used for conveying a liquid to irrigation regions A, B, and C. In this embodiment, the conveying pipe 4 is connected to an irrigation source, sequentially passes through the irrigation regions A and B to reach the irrigation region C, and the liquid is conveyed from the irrigation source to the irrigation regions A, B, and C through the conveying pipe 4. The irrigation system 1 further includes an irrigation apparatus, connected to the conveying pipe, and used for respectively irrigating the irrigation regions A, B, and C with the liquid conveyed by the conveying pipe. In this embodiment, one conveying pipe 4 is at least connected to two irrigation apparatuses at intervals. Specifically, in this embodiment, one conveying pipe 4 is connected to three irrigation apparatuses 51, 52, and 53 that are respectively located in the irrigation regions A, B, and C, to respectively irrigate the irrigation regions A, B, and C with the liquid conveyed by the conveying pipe 4.

The irrigation regions A, B, and C are regions having different irrigation requirements. In one of the cases, the irrigation regions A, B, and C are planted with different types of plants, and the different types of plants have different requirements for water or other supplementals. For example, plants in the region A require more water than those in the region B. Therefore, the watering frequency of the region A is higher than that of the region B, and the region B may be in a nonirrigated state while the region A is in an irrigated state. In another example, the type of a nutrient solution required by the plants in the region A is different from that required by the plants in the region C. Therefore, the region C is in a nonirrigated state while the region A is irrigated with a corresponding nutrient solution. Another case in which the irrigation regions A, B, and C have different irrigation requirements is that the irrigation regions A, B, and C are in different environments. For example, the region A is shaded by trees. Therefore, the region A requires a relatively small amount of water for irrigation. The region B is a relatively open region and is exposed to sunshine for a long time. Therefore, the region B requires a large amount of water for irrigation.

In the conventional irrigation system, to meet irrigation requirements of different irrigation regions, one conveying pipe is disposed for each irrigation region, and a liquid respectively reaches corresponding irrigation regions through different conveying pipes. Irrigation operations of the irrigation regions do not interfere with each other. In such a system, if the irrigation operations need to be performed in different irrigation regions at different time or the types of liquids used for irrigation are different, the irrigation operations may be implemented by simply controlling a liquid in each conveying pipe. For example, when one of the regions needs to be irrigated and another region does not need to be irrigated, a liquid flows, by a main valve at an irrigation source is controlled to enable a liquid to flow into a conveying pipe corresponding to the region that needs to be irrigated. In another example, when one of the regions needs to be irrigated and another region needs to be irrigated with a nutrient solution, the main valve may be similarly controlled to enable water and the nutrient solution to respectively flow into corresponding conveying pipes, thereby implementing corresponding irrigation operations. In such a system, the main valve is usually disposed in a region in which operations are convenient for users, for example, in a place near a residence. In this way, a user can control the irrigation system from nearby.

If a plurality of regions are irrigated by using only one conveying pipe, the user cannot control only the main valve to control irrigation apparatuses in different regions to be in different states. An irrigation region usually has a relatively large area. It takes much time and effort for a user to manually control the opening and closing of the irrigation apparatuses in different irrigation regions, leading to considerable inconvenience to the user. To implement the irrigation of a plurality of regions by using only one conveying pipe and enable a plurality of irrigation apparatuses to perform irrigation operations within different time periods, the solution of this embodiment is as fallows.

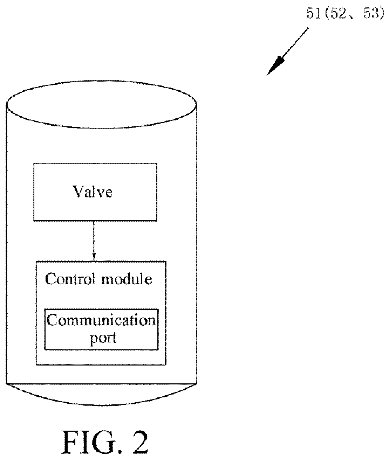

To implement that different irrigation apparatuses 51, 52, and 53 can perform irrigation operations within different time periods, as shown in FIG. 2, in this embodiment, each of the irrigation apparatuses 51, 52, and 53 includes a valve and a control module that is disposed at the irrigation apparatus and controls the opening and closing of the valve. The control modules of the irrigation apparatuses 51, 52, and 53 independently control the opening or closing of the corresponding valves, to enable the at least two irrigation apparatuses to respectively perform irrigation operations within different time periods. Further, the control module includes a communication port to obtain remote irrigation information. The control module controls the opening or closing of the valve according to the irrigation information obtained by the communication port.

As shown in FIG. 1, in an embodiment, a conductive cable is disposed in the conveying pipe, the conductive cable includes a communication cable 41 connected to the communication port, and the communication port obtains irrigation information through the communication cable 41.

In this embodiment, the communication ports of the irrigation apparatuses 51, 52, and 53 obtain irrigation information from one same communication source. Specifically, in this embodiment, the irrigation system 1 includes a control center 3, and the communication port is communicatively connected to the control center 3 to obtain irrigation information from the control center 3. That is, the control center 3 is used as a communication source and is communicatively connected to the plurality of irrigation apparatuses 51, 52, and 53.

In this embodiment, the communication port is communicatively connected to the control center 3 through the communication cable 41 to obtain the irrigation information. Specifically, the control center 3 is disposed at an end, close to the irrigation source, of the conveying pipe 4.

In an embodiment, the control center 3 includes a user interaction interface 31 used for setting irrigation information by a user. The user interaction interface may include a button, a touchscreen, a display screen, an LED lamp or the like. The user may input the irrigation information through the button or the touchscreen. The irrigation information may include preset scheduling information such as operation start time and operation duration/an operation end time of each irrigation apparatus or may further include an irrigation interval or operation frequency, an irrigation schedule, and the like. When needing to configure different types of irrigation liquids for different irrigation regions, the irrigation system 1 may further set the types of liquids with which different irrigation apparatuses perform irrigation. The user may further set the attributes of the different irrigation apparatuses, for example, change the factory numbers of the irrigation apparatuses to names that are readily recognizable by users. The display screen or LED lamp may display the current scheduling information to a user, and may also prompt the user when there is a scheduling conflict. For example, there is an overlap in the irrigation time of different types of liquids.

The control center 3 further includes a controller. The controller of the control center 3 is connected to the user interaction interface 31, receives irrigation information inputted on the user interaction interface, processes the irrigation information, and transmits the processed irrigation information to the irrigation apparatuses 51, 52, and 53 through the communication cable 41. The control modules of the irrigation apparatuses 51, 52, and 53 receive irrigation information through the communication ports, and control the opening or closing of the valves based on the irrigation information.

An example of an irrigation procedure is shown in Table 1. When a user sets the following irrigation procedure for the irrigation system 1, the communication ports of the irrigation apparatuses 51, 52, and 53 receive corresponding irrigation information through the communication cable 41, and the control modules store the irrigation information. The control module includes a clock circuit that can determine the current time. For example, at 9:00 am on Monday, the control module of the irrigation apparatus 51 opens the corresponding valve. In such a case, the control center opens a valve of a water source 7. Water is conveyed to the irrigation apparatus 51 in the irrigation region A through the conveying pipe 4. The irrigation apparatus 51 irrigates the irrigation region A with the water. At 10:00 am, the control module of the irrigation apparatus 51 closes the corresponding valve, the irrigation apparatus 51 stops the irrigation, and the control center closes the valve of the water source 7 at the same time. In another example, at 10:00 am on Tuesday, the control module of the irrigation apparatus 52 opens the corresponding valve. In such a case, the control center 3 opens a valve corresponding to a liquid storage container 22 storing a nutrient solution. The nutrient solution is conveyed to the irrigation apparatus 52 in the irrigation region B through the conveying pipe 4. The irrigation apparatus 52 irrigates the irrigation region B with the nutrient solution. At 11:00 am, the control module of the irrigation apparatus 52 closes the corresponding valve, the irrigation apparatus 52 stops the irrigation, and the control center 3 closes the valve of the liquid storage container 22 storing the nutrient solution. Other irrigation apparatuses and the operation manners of the irrigation apparatuses within other time periods are similar to the foregoing. Details are not described herein again.

**Table 1**

| Irrigation apparatus number | Operation date | Operation time | Types of irrigation liquids |
|---|---|---|---|
| 51 | Everyday | 9:00 am to 10:00 am | Water |
| | Every Monday | 10:00 am to 11:00 am | Nutrient solution |
| 52 | Every Monday, Wednesday, and Friday | 3:00 pm to 4:00 pm | Water |
| | Every Tuesday | 10:00 am to 11:00 am | Nutrient solution |
| 53 | Every Thursday | 12:00 am to 2:00 pm | Water |

In this embodiment, the control modules of the irrigation apparatuses 51, 52, and 53 independently control opening and closing of corresponding valves according to the irrigation information received by the communication port, to enable the different irrigation apparatuses 51, 52, and 53 to respectively perform irrigation operations within different time periods, so that only one conveying pipe 4 is used to complete an irrigation task for irrigation regions having different requirements.

In this embodiment, the conductive cable in the conveying pipe 4 further includes a power cable 42, connecting the irrigation apparatuses 51, 52, and 53 to a power supply, to supply electrical energy required for the irrigation apparatuses 51, 52, and 53 to operate. The irrigation system 1 may be powered by an alternating current, for example, connected to the utility power by an adapter or may be powered by a direct current of a battery pack. The power supply supplies electrical energy for the irrigation system 1 to operate, which includes supplying electrical energy to the control center 3. In this embodiment, the power cable 42 may be directly connected to a power supply port of the control center 3. The power supply of the irrigation system 1 may be integrated with the control center 3 and is disposed at an end, close to the irrigation source, of the conveying pipe 4.

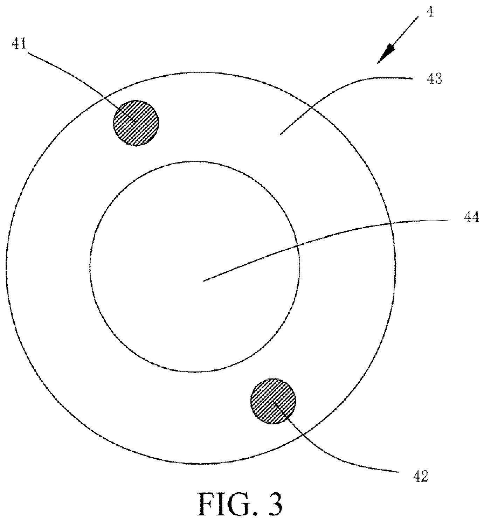

With reference to FIG. 1 and FIG. 3, in this embodiment, a signal cable 41 and the power cable 42 are both integrated with the conveying pipe 4, and the extension direction of the signal cable 41 and the power cable 42 is consistent with the extension direction of the conveying pipe 4. Specifically, the conveying pipe 4 includes a conductive layer 43 isolated from a liquid conveyance layer 44 conveying a liquid. The communication cable 41 and the power cable 42 are disposed in the conductive layer 43. The liquid conveyance layer 44 and the conductive layer 43 are isolated from each other to prevent the liquid conveyed by the conveying pipe 4 from affecting the performance of the communication cable 41 and the power cable 42. In this embodiment, the communication cable 41 includes a data transmission cable, specifically, a network line. The power cable 42 includes a wire, specifically, a metal wire.

In another embodiment, the irrigation system includes a conductive cable. The conductive cable is connected to the irrigation apparatus. The conductive cable includes a communication cable and a power cable. Therefore, the conductive cable may transmit communication data and electricity at the same time. The conductive cable is designed independent of the conveying pipe. Specifically, the conductive cable is installed in parallel with the conveying pipe. Specifically, the irrigation apparatus includes a power supply interface and a communication interface. Herein, if communication data and electricity are transmitted by using one conductive cable at the same time, the power supply interface and the communication interface on the irrigation apparatus are also integrated into a comprehensive port. Specifically, each irrigation apparatus is provided with two comprehensive ports, and the conductive cable can connect two adjacent irrigation apparatuses in the irrigation system together, so that the irrigation apparatuses can communicate with each other. It is designed that the conductive cable has the functions of both a communication cable and a power cable, the irrigation system consumes less energy, the costs are reduced, and the wire arrangement is easier.

In this embodiment, each of the irrigation apparatuses 51, 52, and 53 includes a first interface. The conveying pipe 4 includes a second interface matching the first interface. The first interface matches the second interface in shape, to enable ports of the conductive cable to be connected to the corresponding ports of the irrigation apparatuses 51, 52, and 53 when the first interface is joined to the second interfaces. Specifically, the communication cable 41 is connected to communication ports, and the power cable 42 is connected to power supply ports. Specifically, each of the first interfaces of the irrigation apparatuses 51, 52, and 53 includes a protrusion. The second interface of the conveying pipe 4 includes a groove. The protrusion of the first interface and the groove of the second interface have shapes that match each other. Only when the protrusion of the first interface is inserted in the groove of the second interface, a terminal, corresponding to the communication port, on the first interface is connected to a terminal, corresponding to the communication cable 41, on the second interface. A terminal, corresponding to the power supply port, on the first interface is connected to a terminal, corresponding to the power cable 42, on the second interface. Certainly, the shape matching between the first interface and the second interface may be alternatively implemented by many other structures. Such structures are no longer enumerated. In addition, each of the first interface and the second interface further includes a locking structure.

The structure of the conveying pipe 4 and the joint structure for the conveying pipe 4 and each of the irrigation apparatuses 51, 52, and 53 enable users to easily implement the control connections and power supply connections of the irrigation apparatuses 51, 52, and 53 by connecting the conveying pipe 4 and the irrigation apparatuses 51, 52, and 53, thereby simplifying operations for users and improving user experience.

The irrigation system 1 in this embodiment provides data transmission and energy transmission from the control center 3 to the irrigation apparatuses 51, 52, and 53 by arranging the communication cable 41 and the power cable 42 in the conveying pipe 4, to resolve the problems of control and power supply of the irrigation apparatuses 51, 52, and 53, thereby independently controlling the plurality of irrigation apparatuses 51, 52, and 53 by using one conveying pipe 4, so that the irrigation system 1 has reduced costs, convenient installation, pleasing appearance, and convenient operations for users.

In this embodiment, the control center 3 is usually disposed at a place readily reachable by a user, for example, at a place near a residence. Therefore, the user may set irrigation information through the control center 3 more conveniently. With the design of this embodiment, the user can conveniently control irrigation operations of a plurality of irrigation apparatuses by using the control center 3.

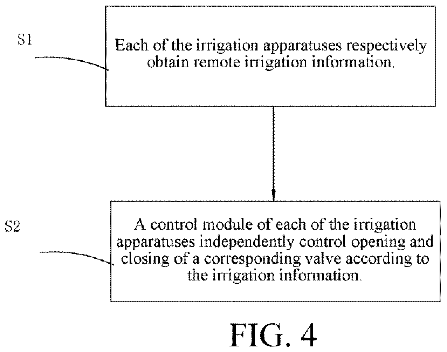

As shown in FIG. 4, in this embodiment, a control procedure of the irrigation system 1 is as fallows.

S1: Irrigation apparatuses respectively obtain remote irrigation information.

Specifically, the control center 3 receives irrigation information inputted by a user, and transmits the irrigation information to the irrigation apparatuses 51, 52, and 53 through the communication cable 41. The communication ports of the irrigation apparatuses 51, 52, and 53 receive the irrigation information. The control modules store the irrigation information.

S2: The control modules of the irrigation apparatuses independently control opening and closing of corresponding valves according to the irrigation information.

For a specific control method, refer to the description of Table 1.

In another embodiment of the present invention, the structure and the method of the irrigation system 1 are basically the same as those in the foregoing embodiment, and the difference is that the control center 3 includes a wireless communication unit (referred to as a second wireless communication unit below), the irrigation information is received through the wireless communication unit, and after processing, the received irrigation information is further transmitted to the irrigation apparatuses 51, 52, and 53. That is, communication connections between the irrigation apparatuses 51, 52, and 53 and an external control device may be alternatively indirectly implemented through the communication cable 41. The manner of receiving the irrigation information by the second wireless communication unit is similar to that by the first wireless communication units 61, 62, and 63 in the following embodiment. The wireless communication unit is used in place of a user interaction interface to receive information inputted by the user, so that it is more convenient for the user to control the irrigation system 1.

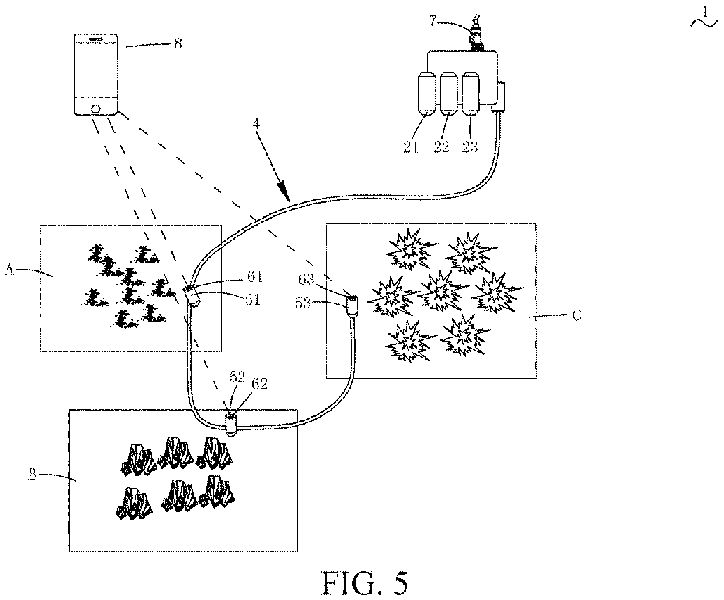

In another embodiment of the present invention, as shown in FIG. 5, the irrigation apparatuses 51, 52, and 53 respectively include the first wireless communication units 61, 62, and 63 connected to the communication port. The communication port obtains information through the first wireless communication units 61, 62, and 63. The irrigation apparatuses 51, 52, and 53 may communicate with the control centers 3 in the irrigation system 1 through the first wireless communication units 61, 62, and 63, for example, communicate with the second wireless communication unit of the control centers 3, and may further communicate with an external control device. In this embodiment, communication between the irrigation apparatuses 51, 52, and 53 and the external control device is used as an example. The communication ports are respectively communicatively connected to the external control device by the first wireless communication units 61, 62, and 63. That is, the external control device is used as a communication source and is communicatively connected to the plurality of irrigation apparatuses 51, 52, and 53.

In an embodiment, the external control device includes an intelligent terminal 8 of the user. Specifically, an APP controlling the irrigation system on the intelligent terminal 8. The user may set the irrigation information on an interface of the APP. Specifically, the user can control a button on the APP to remotely control opening or closing of a valve of an irrigation apparatus. Icons corresponding to the irrigation apparatuses 51, 52, and 53 and control buttons such as "start buttons" and "off buttons" associated with the irrigation apparatuses 51, 52, and 53 may be displayed on the APP. The user may alternatively set, for example, an operation schedule shown in Table 1 through scheduling on the APP. The APP may further show operation statuses and operation parameters of the irrigation apparatuses 51, 52, and 53, for example, an irrigation amount completed on a current day, to the user.

Further, the APP may provide visualized virtual irrigation regions to the user. For example, the APP may be provided with a built-in electronic map such as a Google map. When the user enters location information of the user's garden, the APP automatically performs positioning and displays the user's garden. Alternatively, the user may manually mark the user's garden on the map. The APP may provide some virtual irrigation apparatuses. The user may drag the virtual irrigation apparatuses on an image of the garden to place the virtual irrigation apparatuses in positions on the image that correspond to actual irrigation apparatuses, to simulate irrigation operations of the irrigation apparatuses. The user observes the operation ranges of the irrigation apparatuses and the types of covering vegetation to determine whether the irrigation apparatuses are appropriately set. The user may further set various types of parameters for the irrigation apparatuses on the graphical map, so that such settings are more intuitive and offer better user experience.

Further, the APP may further recommend irrigation parameters to the user. The APP may obtain weather forecast information to remind the user of possible weather conditions within a period in the future, or directly recommend a schedule to the user according to the weather forecast information. For example, if rain is predicted in the next week, the user is recommended to cancel the irrigation operation in the next week. The APP may further determine the irrigation requirements of vegetation according to a phased climate. For example, it is recommended to increase of irrigation frequency in a season with long sunshine hours or rapid vegetation growth, or an appropriate irrigation amount is determined for the vegetation in combination with the latitude, longitude, and altitude of the garden, and the recommended irrigation parameters are outputted. The user may select whether to accept the irrigation parameters recommended by the APP or may set acceptance by default. If the user sets acceptance by default, the irrigation apparatuses 51, 52, and 53 directly perform irrigation tasks according to the irrigation parameters recommended by the APP.

Further, the APP may further provide the user with a data statistics service, collecting statistics of irrigation amounts of the garden in different periods of one year, and provide the healthy growth status of vegetation, or the like.

Collection and calculation of data of the APP may both be completed on a cloud side. The first wireless communication units 61, 62, and 63 of the irrigation apparatuses 51, 52, and 53 may also directly obtain the data from the cloud side.

The first wireless communication units 61, 62, and 63 of the irrigation apparatuses obtain the foregoing irrigation information by accessing a wireless communication network. Specifically, each of the first wireless communication units 61, 62, and 63 includes a cellular network communication unit, a Wi-Fi communication unit, a Bluetooth communication unit, an RF communication unit, a UWB communication unit or the like. The wireless communication network accessed by the first wireless communication units 61, 62, and 63 includes a local area network (LAN), a metropolitan area network (MAN), a wide area network (WAN), a wireless personal area network (WPAN) or the like.

Specifically, in this embodiment, the first wireless communication units 61, 62, and 63 of the irrigation apparatuses 51, 52, and 53 communicate with each other, to form a multi-level transmission communication network with the first wireless communication units 61, 62, and 63 as communication nodes. Specifically, the wireless communication network includes a mesh work. Because a total region area formed by different irrigation regions may be relatively large, a coverage area of the wireless communication network may be restricted. For example, when a Wi-Fi network is used to perform communication, a Wi-Fi gateway device is usually disposed in the residence of the user, an irrigation apparatus closer to the residence can be more stably connected to the Wi-Fi network, and an irrigation apparatus farther away from the residence may fail to be connected to the Wi-Fi network. As a result, the irrigation apparatus cannot obtain the irrigation information, and the normal operation of the irrigation system is affected. To resolve the foregoing problems, in this embodiment, the first wireless communication units 61, 62, and 63 of the irrigation apparatuses 51, 52, and 53 can communicate with each other. In this way, an irrigation apparatus farther away from the residence may obtain the irrigation information through an irrigation apparatus that is adjacent to the irrigation apparatus and is closer to the residence, and the irrigation apparatus adjacent to the irrigation apparatus can further obtain the irrigation information from a next irrigation apparatus that is even closer to the residence. By analogy, a multi-level transmission communication network is formed by using a plurality of first wireless communication units as communication nodes. An irrigation apparatus closest to the residence transmits the irrigation information to other irrigation apparatuses one by one. Therefore, each irrigation apparatus can stably obtain the irrigation information, to ensure the normal operation of the irrigation system 1.

In this embodiment, the irrigation information obtained by the first wireless communication units 61, 62, and 63 is transmitted to the control modules through the communication ports. The control modules control the opening and closing of the valves based on the irrigation information. Because the irrigation apparatuses 51, 52, and 53 respectively include independent control modules and the first wireless communication units 61, 62, and 63, the first wireless communication units 61, 62, and 63 of the irrigation apparatuses 51, 52, and 53 may independently receive the irrigation information. The control module may independently control the opening and closing of the valve based on the irrigation information received by the first wireless communication units 61, 62, and 63, thereby implementing independent control over the plurality of irrigation apparatuses 51, 52, and 53, to enable the different irrigation apparatuses 51, 52, and 53 to perform irrigation operations within different time periods. The first wireless communication units 61, 62, and 63 are configured for the irrigation apparatuses 51, 52, and 53, and wireless communication between the irrigation apparatuses 51, 52, and 53 and an external control device is respectively performed by using the first wireless communication units 61, 62, and 63, so that it is simpler, more convenient, and more intelligent for a user to control the irrigation system 1.

It may be understood that the irrigation apparatuses 51, 52, and 53 may further communicate with the control center 3 of the irrigation system 1 through the first wireless communication units 61, 62, and 63. Because the control center 3 is usually disposed in a place that is easy for a user to access or a place closer to a residence, the user may conveniently and reliably control the operation of the irrigation system 1 through the control center 3. The control center 3 may be one of the nodes of the multi-level transmission communication network. Wireless communicative connections are respectively implemented between the irrigation apparatuses 51, 52, and 53 and the control center 3 by using the first wireless communication units 61, 62, and 63 and the second wireless communication unit.

In this embodiment, a power generation device is further respectively disposed at the irrigation apparatuses 51, 52, and 53 to supply electrical energy required for the irrigation apparatuses 51, 52, and 53 to operate. In a specific embodiment, the power generation device includes a turbine, driven by a conveyed liquid to output electrical energy to the irrigation apparatuses 51, 52, and 53. Specifically, a turbine includes a rotator, and the rotator includes blades. The turbine is disposed in the conveying pipe 4. When a liquid flows through the conveying pipe 4, a force applied by the liquid to the blades drives the entire rotator to rotate. The rotator rotates to form a magnetic field. Magnetic lines of force are cut by a coil of a stator, and an electric potential is induced in the coil. Electrical energy output cables of the turbines are respectively connected to the power supply ports of the irrigation apparatuses 51, 52, and 53 to supply power to the irrigation apparatuses 51, 52, and 53. The turbines are disposed at the irrigation apparatuses 51, 52, and 53, and power can be generated by using the liquid flowing through the conveying pipe, to resolve a problem of supplying power to the irrigation apparatuses 51, 52, and 53, thereby effectively utilizing energy.

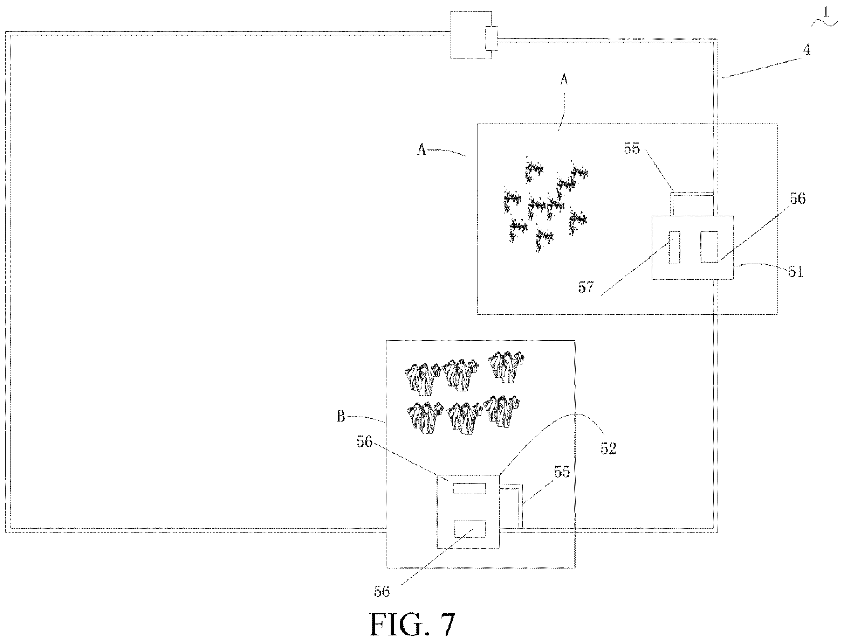

In an embodiment, the irrigation system includes a bypass pipe 55 connected to the power generation device 56, and a liquid in the bypass pipe 55 flows through the power generation device 56 to generate electricity. FIG. 7 shows an irrigation system according to an embodiment of the present invention. Specifically, the power generation device 56 includes a turbine generator, generating electricity when a liquid flows through the turbine generator. Specifically, when flowing through the turbine generator, the liquid impacts the rotor of the generator to enable the rotor to rotate, and drives the rotator of the generator through a main shaft to rotate. When a direct current is applied to the coil of the rotator of the generator, the coil of the rotator generates a rotating magnetic field. Magnetic lines of force are cut by the coil of the stator during the rotation. According to the principle of electromagnetic induction, voltages are generated in the coil of the stator. After the coil of the stator is connected to a load, a currents is generated in the coil of the stator. That is, when there is a liquid flowing through the turbine generator, energy with which the liquid flows is converted into mechanical energy. A rotating shaft of the generator drives the rotator of the generator to convert the mechanical energy into electrical energy and output the electrical energy, to enable the irrigation apparatuses 51 and 52 to generate electricity, so that opening and closing of the valve 57 can be intelligently controlled, to intelligently control the operation process of the irrigation system. Specifically, each of the irrigation apparatuses 51 and 52 is provided with a power generation device 56, so that power can be independently supplied to both the irrigation apparatus 51 and 52. If a power generation device 56 fails, the normal operation of the other irrigation apparatus is not affected. To enable the irrigation apparatuses 51 and 52 to continuously obtain energy, the power generation device 56 may be used for supplying continuous electricity to the irrigation apparatuses 51 and 52. That is, under a particular circumstance, if it is necessary to enable the irrigation apparatuses 51 and 52 to obtain continuous energy, it is necessary to maintain that there is always a liquid flowing through the power generation device 56, to ensure that the power generation devices may generate continuous electricity. Specifically, each of the irrigation apparatuses 51 and 52 includes components such as the valve 57, the power generation device 56, and the control module. The control module can control the opening and closing of the valve 57 when there is electricity, to intelligently control the irrigation operation. Specifically, there needs to be a liquid flowing through the power generation devices 56 of the irrigation apparatuses 51 and 52 to generate electricity to supply energy to the irrigation apparatuses 51 and 52, and there needs to be a liquid at the valve 57, so that the valve 57, when opened, supplies the liquid to the operating region. If a liquid needs to be supplied to both the valve 57 and the power generation device 56 when there is only one pipe used for conveying a liquid, there needs to be two ports used for conveying the liquid to the valve and the power generation device. The conveying pipe 4 can supply a liquid to the valve 57 and the power generation device 56 by arranging the bypass pipe 55, to ensure that there is a liquid supply at the valve 57 in a case that the power generation device 56 can generate electricity. Specifically, the bypass pipe 55 may be disposed inside each of the irrigation apparatuses 51 and 52. Specifically, the power generation device 56 is in communication with the valve 57 by the bypass pipe 55. The liquid in the conveying pipe 4 flows through the power generation device 56. The bypass pipe 55 is arranged to add a path to the valve 57 for the liquid flowing through the power generation device 56, to supply the valve 57 with the liquid. In another embodiment, the bypass pipe 55 may be alternatively disposed outside each of the irrigation apparatuses 51 and 52. Specifically, one end of the bypass pipe 55 is connected to one of the power generation device 56 and the valve 57 to provide each of the irrigation apparatuses 51 and 52 with two liquid input ports. One liquid input port is connected to the power generation device 56, and the other liquid input port is connected to the valve 57, to enable both the power generation device 56 and the valve 57 to obtain a liquid. Optionally, the irrigation system may be provided with the plurality of irrigation apparatuses 51 and 52. Therefore, the conveying pipe 4 may include a plurality of bypass pipes 55. The plurality of bypass pipes 55 may be respectively designed in small sections. Specifically, the bypass pipe 55 may be located in each of the irrigation apparatuses 51 and 52 or outside each of the irrigation apparatuses 51 and 52. When the bypass pipe 55 is located inside each of the irrigation apparatuses 51 and 52, the irrigation apparatuses 51 and 52 may be enclosed structures. The conveying pipe 4 may start to operate after being connected to the irrigation apparatuses 51 and 52. The liquid in the irrigation apparatuses 51 and 52 may be automatically divided into two branches. That is, one branch flows through the power generation device 56, and the other branch flows through the valve 57. Specifically, the bypass pipe 55 may be integrated with the conveying pipe 4 or may not be integrated with the conveying pipe 4. When the bypass pipe 55 is integrated with the conveying pipe 4, the conveying pipe 4 includes a liquid conveyance layer. The conveying pipe 4 further includes the bypass pipe 55. The liquid conveyance layer and the bypass pipe 55 are arranged in parallel in the conveying pipe 4, and a liquid flows in both the liquid conveyance layer and the bypass pipe 55. That is, there are two liquid flows inside the conveying pipe 4. One liquid flow flows through the power generation device 56 to generate electricity, and the other liquid flow flows through the valve 57 to supply a liquid to the irrigation region when the valve 57 is opened. When the bypass pipe 55 is not integrated with the conveying pipe 4, as described above, the bypass pipe 55 may be located inside each of the irrigation apparatuses 51 and 52, and the bypass pipe 55 and each of the irrigation apparatuses 51 and 52 may further have an enclosed design. In addition, the bypass pipe may alternatively form an independent pipe. Preferably, the bypass pipe may be disposed in parallel with the conveying pipe 4, and the bypass pipe and the conveying pipe 4 are respectively in communication with the power generation device 56 and the valve 57. In an embodiment, in some cases, if it is necessary to enable the power generation device 56 to continuously generate electricity, a liquid needs to continuously flow through the power generation device 56. Specifically, the conveying pipe 4 is an annular pipe, and a liquid in the conveying pipe 4 forms a flowing loop. That is, the liquid in the conveying pipe 4 flows from a liquid source and flows back to the liquid source. Specifically, when the liquid in the conveying pipe 4 forms a loop, the liquid in the conveying pipe 4 may fail to flow for the lack of pressure difference. Preferably, a water pump is added in an appropriate position of the conveying pipe 4. For example, a pump apparatus is add at the liquid source to enable the liquid in the conveying pipe 4 to continuously flow. When the liquid flows through the power generation devices 56 of the irrigation apparatuses 51 and 52, the power generation devices 56 generate electrical energy. A continuous liquid flows through the power generation devices 56 to enable the irrigation apparatuses 51 and 52 to continuously obtain energy. In the irrigation system, a user may make the conveying pipe 4 convey a liquid such as water and a nutrient solution according to requirements of the operating regions. When the conveying pipe 4 conveys any liquid, the power generation device 56 can generate electricity through the flow of the liquid, to supply energy to the irrigation apparatuses 51 and 52. The power generation devices 56 are arranged on the irrigation apparatuses 51 and 52, so that the irrigation apparatuses 51 and 52 may be in a charged state. When receiving control information of the communication port, the control module can effectively open and close the valve 57 in response to the control information. In addition, liquid power generation is designed for the power generation device 56, the hardware configuration of the irrigation system is simplified, so that an electricity transmission system no longer needs to be disposed, and the intelligent irrigation system can be used more conveniently and can be more intelligent. In an embodiment, a backup battery may be provided at the power generation device 56.

In another specific embodiment, the power generation device includes a photovoltaic unit. The photovoltaic unit receives light energy, converts the light energy into electrical energy, and supplies the electrical energy to each of the irrigation apparatuses 51, 52, and 53. A solar panel is disposed at each of the irrigation apparatuses 51, 52, and 53 to convert solar energy into electrical energy. Specifically, the solar panel is disposed on the top surface of each of the irrigation apparatuses 51, 52, and 53 or enveloped on the outer surface of the irrigation apparatus. Because a period during which an irrigation region has a high irrigation requirement is usually a period having a better light condition, the solar panel can supply relatively sufficient electrical energy to each of the irrigation apparatuses 51, 52, and 53. In an embodiment, a battery is also disposed at each of the irrigation apparatuses 51, 52, and 53 and used for storing the electrical energy converted by the solar panel. Certainly, in other embodiments, alternatively, only batteries may be arranged for the irrigation apparatuses 51, 52, and 53 to supply power.

In another specific embodiment, the power generation device includes a piezoelectric unit. The piezoelectric unit converts the pressure generated by the liquid flowing through the conveying pipe 4 into electrical energy, and supplies the electrical energy to the irrigation apparatus.

It may be understood that the communication manners and the power supply manners of the irrigation apparatuses 51, 52, and 53 may be combined arbitrarily. For example, when obtaining irrigation information through the communication cable 41, the irrigation apparatuses 51, 52, and 53 may further supply power by using the photovoltaic units to generate power at the same time. When obtaining the irrigation information through the first wireless communication units 61, 62, and 63, the irrigation apparatuses 51, 52, and 53 may further supply power by using the power cable 42 at the same time, and the like.

In another embodiment of the present invention, the structure and method of the irrigation system 1 are basically the same as those in the foregoing, the difference is that an external control device includes a third-party service device, and the first wireless communication units 61, 62, and 63 receive information transmitted by the third-party service device. Specifically, the user may entrust a third party to manage the user's irrigation system. Specifically, the service may be provided by a manufacturer of the irrigation system. Each irrigation system includes an account. The user or the third party may manage the corresponding irrigation system after logging in to the account. The user may authorize the third party to log in to the account of the user's irrigation system. A plurality of pieces of information such as historical irrigation information, vegetation information, and position information about the irrigation system may be recorded in the account. The third party may further provide the user with some optimization services, for example, customize a special care service for vegetation. The information in the account of the irrigation system may be stored at a cloud side. The first/second wireless communication unit directly obtain the irrigation information from the cloud side after accessing a wireless communication network. In the foregoing method, a user can further be freed from garden management work, and more professional customized services are provided for garden management.

In an embodiment of the present invention, the conveying pipe 4 conveys the same type of liquid to different irrigation apparatuses. For example, the conveying pipe 4 conveys water to the different irrigation apparatuses 51, 52, and 53. The conveying pipe 4 is connected to municipal water supply equipment.

In another embodiment of the present invention, the conveying pipe 4 conveys different types of liquids to the different irrigation apparatuses 51, 52, and 53. When the conveying pipe 4 conveys different types of liquids to the different irrigation apparatuses 51, 52, and 53, the different liquids are conveyed by the conveying pipe 4 to corresponding irrigation apparatuses within different time periods, and the irrigation apparatuses 51, 52, and 53 open the valves within corresponding time periods and irrigate the irrigation regions with corresponding liquids. Referring to FIG. 1, the irrigation source includes a plurality of liquid storage container 21, 22, and 23, respectively storing liquids with which the irrigation regions A, B, and C are irrigated. When the irrigation region A needs to be irrigated, the valve of the irrigation apparatus 51 is opened, and the valve of the liquid storage container 21 is opened at the same time. The liquid is conveyed by the conveying pipe 4 from the liquid storage container 21 to the irrigation apparatus 51, and the irrigation apparatus 51 irrigates the irrigation region A with the liquid. When the irrigation region B needs to be irrigated, the valve of the irrigation apparatus 52 is opened, and the valve of the liquid storage container 22 is opened at the same time. The liquid is conveyed by the conveying pipe 4 from the liquid storage container 22 to the irrigation apparatus 52, and the irrigation apparatus 52 irrigates the irrigation region B with the liquid. A case when the irrigation region C needs to be irrigated is similar. Details are not described herein again. When the types of liquids with which the different irrigation apparatuses 51, 52, and 53 perform irrigation are different, the irrigation apparatuses 51, 52, and 53 operate at different time periods, and different types of liquids flow through one same conveying pipe section within different time periods.

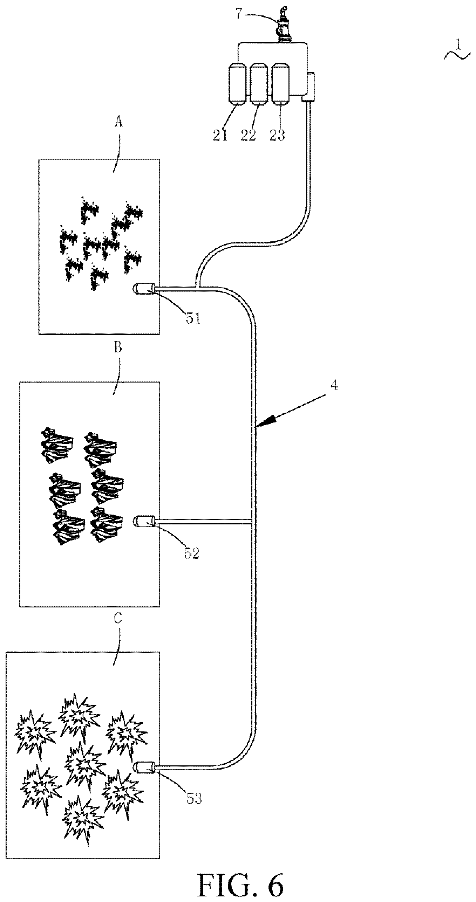

One conveying pipe discussed in the embodiments of the present invention includes one conveying pipe formed by a plurality of conveying pipe sections or an integrated conveying pipe. It needs to be noted that in the embodiments of the present invention, the irrigation apparatus may be directly disposed on the trunk of the conveying pipe or may be connected to the trunk of the conveying pipe through a branch conveying pipe, for example, the case shown in FIG. 6. In such a case, the liquid mainly flows to the irrigation regions through the trunk of the conveying pipe. Therefore, the technical effects that the present invention is to achieve are still obtained. That is, the costs of the irrigation system are reduced, the installation is facilitated for a user, and the appearance of the irrigation regions is kept from being spoiled.

In the embodiments of the present invention, a control system/controller/control module may include a MCU, a CPU, or the like, and may further include components such as a memory and a clock circuit.

In the embodiments of the present invention, the irrigation apparatus may include a spray apparatus or may include a liquid output apparatus in another form, for example, a drip irrigation apparatus.

The present invention further relates to an irrigation apparatus, used for being joined to a conveying pipe to perform an irrigation operation on an irrigation region. For a specific structure, refer to the foregoing embodiments. Details are not described herein again.

The present invention further relates to a conveying pipe, used for conveying a liquid from an irrigation source to an irrigation region. For a specific structure, refer to the foregoing embodiments. Details are not described herein again.

The foregoing embodiments merely describe several implementations of the present invention, which are described in detail. However, it should not be understood as a limitation to the patent scope of the present invention. It should be noted that, persons of ordinary skill in the art may further make some variations and improvements without departing from the concept of the present invention, and the variations and improvements belong to the protection scope of the present invention. Therefore, the protection scope of the patent of the present invention shall be topic to the claims.

## Claims

1. An irrigation system, comprising:
a conveying pipe, used for conveying a liquid from an irrigation source to an irrigation region; and
an irrigation apparatus, connected to the conveying pipe, and irrigating the irrigation region with the liquid conveyed by the conveying pipe, wherein
one conveying pipe is connected to at least two irrigation apparatuses at intervals, each irrigation apparatus comprises a valve,
each irrigation apparatus further comprises a control module for controlling opening or closing of the valve, the control modules of the irrigation apparatuses independently control the opening or closing of the valves, to enable the at least two irrigation apparatuses to respectively perform irrigation operations within different time periods,
the control module comprises a communication port for obtaining remote irrigation information, and
the control module controls the opening or closing of the valve according to the irrigation information obtained by the communication port.

2. The irrigation system according to claim 1, wherein a conductive cable is disposed in the conveying pipe, the conductive cable comprises a communication cable connected to the communication port, and the communication port obtains irrigation information through the communication cable.

3. The irrigation system according to claim 1, wherein a conductive cable is disposed in the conveying pipe, and the conductive cable comprises a power cable connecting the irrigation apparatus to a power supply, to supply electrical energy required for the irrigation apparatus to operate.

4. The irrigation system according to claim 1, wherein the irrigation system further comprises a conductive cable connected to the irrigation apparatus, and the conductive cable comprises a communication cable and a power cable.

5. The irrigation system according to claim 1, wherein the conveying pipe comprises a conductive layer used for arranging a conductive cable and a liquid conveyance layer used for conveying a liquid, and the conductive layer is isolated from the liquid conveyance layer.

6. The irrigation system according to claim 1, wherein a conductive cable is disposed in the conveying pipe, the irrigation apparatus comprises a first interface, the conveying pipe comprises a second interface matching the first interface, and the first interface matches the second interface in shape, to enable the port of the conductive cable to be connected to the corresponding port of the irrigation apparatus when the first interface is joined to the second interface.

7. The irrigation system according to claim 1, wherein the irrigation apparatus comprises a first wireless communication unit connected to the communication port, and the communication port obtains irrigation information through the first wireless communication unit.

8. The irrigation system according to claim 7, wherein the first wireless communication unit comprises a cellular network communication unit, a Wi-Fi communication unit, a Bluetooth communication unit, an RF communication unit or a UWB communication unit.

9. The irrigation system according to claim 7, wherein the first wireless communication units communicate with each other to form a multi-level transmission communication network with the first wireless communication units as communication nodes.

10. The irrigation system according to claim 1, wherein a power generation device is further disposed at the irrigation apparatus, to supply electrical energy required for the irrigation apparatus to operate.

11. The irrigation system according to claim 10, wherein the power generation device comprises a turbine, a photovoltaic unit or a piezoelectric unit.

12. The irrigation system according to claim 10, wherein the irrigation system comprises a bypass pipe connected to the power generation devices, and a liquid in the bypass pipe flows through the power generation device to generate electricity.

13. The irrigation system according to claim 1, wherein the conveying pipe is an annular pipe, and a liquid in the conveying pipe forms a loop.

14. The irrigation system according to claim 1, wherein the communication port of each irrigation apparatus obtains irrigation information from one same communication source.

15. The irrigation system according to claim 1, wherein the irrigation system comprises a control center, and the communication port is communicatively connected to the control center to obtain irrigation information from the control center.

16. The irrigation system according to claim 15, wherein the control center is disposed at an end, connected to the irrigation source, of the conveying pipe.

17. The irrigation system according to claim 15, wherein the control center comprises a user interaction interface used for setting irrigation information by a user.

18. The irrigation system according to claim 15, wherein the control center comprises a second wireless communication unit for obtaining the remote irrigation information.

19. The irrigation system according to claim 1, wherein the communication port is communicatively connected to an external control device, for example, communicatively connected to an intelligent terminal of a user.

20. The irrigation system according to claim 1, wherein the irrigation information comprises preset scheduling information, the preset scheduling information comprises an operation start time and an operation end time of each irrigation apparatus, and the control module controls the opening of the valve of the irrigation apparatus according to the operation start time, and controls the closing of the valve of the irrigation apparatus according to the operation end time.

21. A control method of an irrigation system, the irrigation system comprising: a conveying pipe conveying a liquid from an irrigation source to an irrigation region; and an irrigation apparatus, connected to the conveying pipe, and irrigating the irrigation region with the liquid conveyed by the conveying pipe, wherein one conveying pipe is connected to at least two irrigation apparatuses at intervals, each irrigation apparatus comprises a valve and a control module controlling opening or closing of the valve, the control method comprising:
respectively obtaining, by irrigation apparatuses, remote irrigation information; and
independently controlling, by the control modules of the irrigation apparatuses, the opening or closing of the valves according to the irrigation information, to enable the at least two irrigation apparatuses to respectively perform irrigation operations within different time periods.

22. An irrigation apparatus, used for being joined to a conveying pipe to perform an irrigation operation on an irrigation region, and comprising:
a valve, the irrigation apparatus performing an irrigation operation when the valve is opened, wherein
the irrigation apparatus further comprises:
a control module, controlling opening or closing of the valve, wherein
the control module comprises a communication port for obtaining remote irrigation information, and
the control module controls the opening or closing of the valve according to the irrigation information obtained by the communication port; and
a first interface, used for being joined to a second interface of the conveying pipe.

23. The irrigation apparatus according to claim 22, wherein the irrigation apparatus further comprises a power generation device, to supply electrical energy required for the irrigation apparatus to operate.

24. The irrigation apparatus according to claim 23, wherein the power generation device comprises a turbine, a photovoltaic unit or a piezoelectric unit.

25. The irrigation apparatus according to claim 23, wherein the irrigation apparatus comprises a bypass pipe connected to the power generation device, and a liquid in the bypass pipe flows through the power generation device to generate electricity.

26. The irrigation apparatus according to claim 22, wherein the conveying pipe is an annular pipe, and a liquid in the conveying pipe forms a loop.

27. The irrigation apparatus according to claim 22, wherein the conveying pipe comprises a liquid conveyance layer, and the first interface matches the second interface of the conveying pipe in shape to enable the irrigation apparatus to be in fluid communication with the conveying pipe when the first interface is joined to the second interface.

28. The irrigation apparatus according to claim 22, wherein the conveying pipe comprises a conductive layer, a communication cable and/or a power cable is disposed in the conductive layer, the first interface is connected to a communication port and/or a power supply port of the irrigation apparatus, and the first interface matches the second interface of the conveying pipe in shape, to enable the communication port and/or the power supply port of the irrigation apparatus to be correspondingly connected to ports of the communication cable and/or the power cable of the conveying pipe when the first interface is joined to the second interface.

29. A conveying pipe, used for conveying a liquid from an irrigation source to an irrigation region, and comprising:
a liquid conveyance layer, used for conveying a liquid, wherein
the conveying pipe further comprises a conductive layer, a communication cable and/or a power cable is disposed in the conductive layer, the communication cable and/or the power cable extends in the extension direction of the conveying pipe, and
the liquid conveyance layer is isolated from the conductive layer.
